# EUROPÄISCHE PATENTANMELDUNG

(11) **EP 4 835 414 A1**
(43) Veröffentlichungstag der Anmeldung: **04.11.2026**
(21) Anmeldenummer: 25173744.1
(22) Anmeldetag: 30.04.2025
(51) Int. Cl.: G01G 19/393

(54) **VERTEILEINRICHUNG FÜR EINE MEHRKOPFWAAGE**

(71) Anmelder: Multipond Wägetechnik GmbH, 84478 Waldkraiburg (DE)
(72) Erfinder: ERK, Michael, 63699 Kefenrod Bindsachsen (DE); KAHLER, Timo, 84539 Ampfing (DE); WALDHÖR, Felix, 84367 Reut (DE); PETERS, Andreas, 84544 Aschau am Inn (DE)
(74) Vertreter: Prüfer & Partner mbB Patentanwälte · Rechtsanwälte

(57) **Zusammenfassung**

Die vorliegende Erfindung beschäftigt sich mit einer Verteileinrichtung (1) zur Verteilung von Produktmengen (P), welche aufweist:
mindestens einen Verteiler (2), welcher dazu angepasst ist, Produkt (P) in mehrere Produktmengen (M) aufzuteilen,
mehrere abgegrenzte Bereiche (3), welche unterhalb des mindestens einen Verteilers (2) angeordnet sind,
wobei oberhalb der abgegrenzten Bereiche (3) jeweils mindestens ein bewegbarer Körper (4) angeordnet ist,
dessen eines Ende gelagert ist, und dessen anderes Ende ungelagert ist. So kann sichergestellt werden, dass Produkte sicher auf die mehreren abgegrenzten Bereiche (3) verteilt werden können.

## Beschreibung

Die vorliegende Erfindung beschäftigt sich mit einer Verteileinrichtung, insbesondere für die Lebensmittelindustrie oder lebensmittelverarbeitende Industrie. Hier sind häufig Mehrkopfwagen im Einsatz, welche bestimmte Produktportionen wiegen. Von einem Verteilteller fallen Produkte in Dosierrinnen, diese vibrieren und die Produktportionen bewegen sich dann in Vorratsbehälter oder auch Wägebehälter. Es soll also Produkt zwischen mehreren Punkten einer Anlage befördert werden.

Produktportionen sollten beim Transport möglichst gleichmäßig verteilt bleiben, auch bei einer gemeinsamen Förderung sollten sich keine Anhäufungen, Klumpen oder andere Gebilde ausbilden. Ferner sollten Produkte nicht aneinanderhaften und auch nicht an den Wänden des Fördersystems haften.

Im Regelfall reagieren Produktportionen beim Auftreffen auf Leitflächen auf eine erwartungsgemäße Art und Weise, können also in vorgesehener Weise geleitet und gefördert werden, es gibt allerdings auch schwierig zu handhabende Produkte, wie beispielsweise lange und weiche Nudeln, welche an Wänden anhaften können, Klumpen bilden können, über die Außenkontur einer Fördereinrichtung hinausragen können usw.

Solche Produkte können durch die im Stand der Technik bekannten Fördereinrichtungen nicht gezielt und sicher gefördert werden, was zu einer Störung des vorhergesehenen Ablaufs, einer Verschlechterung der Leistung (Produktportionen pro Zeiteinheit) bis zu einem Anlagenstopp führen. Auch ein wiederholter Eingriff von Personal, um die Anlage wieder in einen funktionstüchtigen Zustand zu überführen, kann hierbei benötigt werden. Schwierigkeiten können beispielsweise durch die Produktmaße auftreten, d. h. bei langen, gewundenen Produkten, wie beispielsweise Nudeln, Algen oder Käse. Auch können raue, unregelmäßige Oberflächen, bzw. klebrige oder sich verhakende Produkte zu Problemen führen, wie beispielsweise Fruchtgummischlangen, Salate oder ähnliche Lebensmittel.

Beispielsweise lange, bereits gekochte Nudeln, sind sehr biegsam, und legen sich um jede Oberfläche und haften daran, da sie auch noch klebrig sind.

Bei einer Mehrkopfwage können hier von einer Dosierrinne überhängende Nudeln oder zwischen zwei Dosierrinnen befindliche Nudeln nicht zuverlässig dazu gebracht werden, in die eine oder andere Dosierrinne zu gelangen.

Aus dem Stand der Technik ist das Dokument EP 3 396 335 B1 bekannt. Dieses offenbart eine dispersive Zuführeinrichtung, in welcher spiralförmige Fördereinheiten vorhanden sind, um Produkte entsprechend in einer Rinne zu bewegen. Hier wird allerdings auf vibrierende Dosierrinnen verzichtet, es sind hier vielmehr spiralförmige Fördereinrichtungen vorhanden, welche sich innerhalb einer Umhüllung bewegen. Allein diese Fördereinrichtungen bewirken den Produkttransport.

Aus dem Stand der Technik ist ferner das Patent EP 1 899 246 B1 bekannt. Dieses offenbart eine Abgabeeinheit, in welcher oberhalb von Dosierrinnen einer Mehrkopfwage beidseitig gelagerte Schubvorrichtungen angeordnet sind, welche rotieren. Falls also Produkt auf Grenzen zwischen zwei Dosierrinnen auftrifft, sorgen die rotierenden Schubeinheiten dafür, dass das Produkt entweder in die eine oder in die andere Dosierrinne verschoben wird, damit keine Produkte an den Dosierrinnen haften und keine Produktstaus stattfinden.

Im Stand der Technik ist allerdings die Problematik vorhanden, dass bei einer solchen Schubvorrichtung beide Enden gelagert sind, und hierdurch bei Verhaken der Produkte in den Lagerungen weitere Anhäufungen bzw. Verklumpungen möglich sind. Ferner kann Produkt in die äußeren Lagerungen gelangen, was zu verschlechterter Hygiene und zu einem erhöhten Reinigungsaufwand einer entsprechenden Anlage führt. Ferner führen solche relativ komplexen Systeme zu einer höheren Anzahl an Bauteilen, was einen hohen Wartungsaufwand, eine hohe Fehleranfälligkeit und somit höhere Kosten verursachen kann.

Es kann daher als eine Aufgabe der vorliegenden Erfindung angesehen werden, eine hygienegerechte Möglichkeit bereitzustellen, Produkt sicher und störungsarm zu leiten. Ferner ist auch eine leichte Austauschbarkeit der entsprechenden Vorrichtungen erstrebenswert.

Diese technischen Aufgaben werden von einer Verteileinrichtung gemäß Anspruch 1 sowie einer Kombinationswaage 14 sowie einer Verwendung einer Verteileinrichtung gemäß Anspruch 15 gelöst. Weitere vorteilhafte Ausgestaltungen der vorliegenden Erfindung sind Gegenstand der Unteransprüche.

Eine erfindungsgemäße Verteileinrichtung zur Verteilung von Produkten weist auf: einen Verteiler, welcher dazu angepasst ist, Produkte in mehrere Produktmengen aufzuteilen, sowie mehrere abgegrenzte Bereiche, welche unterhalb (evtl. auch außerhalb) des Verteilers angeordnet sind, so dass Produkt auf diesen fallen kann. Oberhalb der abgegrenzten Bereiche, aber unterhalb des Verteilers, ist jeweils ein bewegbarer Körper angeordnet, dessen eines Ende drehbar gelagert ist, und dessen anderes Ende ungelagert und somit auskragend ist. Wegen des einen freien Endes ist eine bessere Hygiene und eine bessere Reinigbarkeit gegeben, ferner eine leichtere Austauschbarkeit. Dadurch, dass ein freies Ende existiert, kann ferner eine mögliche Sammelstelle für Produktreste, beispielsweise nicht abgewickelte Nudeln verhindert werden. Stattdessen können alle Produkte frei nach unten fallen. Somit sind auch alle Bauteile mit Produktkontakt hygienegerecht ausgeführt, es ist eine leichte Zugänglichkeit zur Reinigung vorhanden.

Dadurch, dass ein Ende ungelagert ist, ist hier bei einer Reinigung ferner kein Sprühschatten vorhanden.

Vorzugsweise ist jeder der bewegbaren Körper mit mindestens einem Freiheitsgrad bewegbar ausgeführt. Somit ist eine hinreichende Beweglichkeit vorhanden, um Produkt in die abgegrenzten Bereiche zu befördern.

Vorzugsweise erstreckt sich der bewegbare Körper über mindestens 50 % der Länge der Begrenzung der abgegrenzten Bereiche. So kann sichergestellt werden, dass wenn ein Produkt von oberhalb des Verteilers auf einer Seite der abgegrenzten Bereiche abgeworfen wird, das Produkt stets über den bewegbaren Körper gleitet und von diesem bewegt wird, so dass auf den Begrenzungen der abgegrenzten Bereiche kein Produkt liegen bzw. haften bleibt.

Vorzugsweise ist jeder der bewegbaren Körper mit einem eigenen Antrieb verbunden. Optional ist der bewegbare Körper direkt oder über einen Riemen mit dem Antrieb verbunden.

Dies hat den Vorteil, dass ein gezieltes Drehen eines jeden Rotors je nach Bedarf möglich ist. Beispielsweise könnten hier Sensoren Problemstellen erfassen und nur dort den Rotor drehen, wo dies nötig ist. Die Drehrichtung kann je nach Bedarf für einen jeden Rotor festgelegt werden, und die Sensoren können dann eine Position, beispielsweise einer Nudel erfassen. Je nachdem, wie stark diese nach rechts oder nach links überhängt, kann ein Rotor dann so drehen, dass das Produkt, beispielsweise die Nudel, einen möglichst geringen Abwicklungsweg hat. Ein Drehen in die andere Richtung wäre eher nachteilhaft, da die Schwerkraft einer überwiegend in die andere Richtung hängenden Nudel die Reibungskraft zwischen Nudel und Rotor übersteigen würde und die Nudel sonst reißen oder verklumpen könnte. Auch kann hier beispielsweise durch die Steuerung mit der Drehung des Rotors abgewartet werden, bis ein Sensor anzeigt, dass in einer darunter liegenden Dosierrinne ausreichend Platz vorhanden ist, um die Produktportion aufnehmen zu können.

Ferner reicht jeweils ein Motor (z.B. Schrittmotor) für den Antrieb eines Rotators aus, und es ist eine platzsparende Anordnung des Antriebs, auch hygienegerecht innerhalb der Maschinengrundsäule, möglich. Beispielhaft könnten zum Einsatz kommen, Direktantriebe oder Übersetzungen durch Getriebe oder Riementriebe.

Weiter vorzugsweise ist jeder bewegbare Körper rotierbar, also für eine Rotationsbewegung angepasst, und weiter vorzugsweise in beide Richtungen bewegbar. Weiter vorzugsweise ist eine Rotation um die eigene Längsachse jedes bewegbaren Körpers möglich.

Vorzugsweise ist der bewegbare Körper zylindrisch, kegelstumpfförmig oder polygonal. Optional kann er auch spiralförmig sein. Verschiedene Körperformen können entsprechend an die zu fördernde Produkte angepasst werden, und es kann auch experimentell oder simulativ untersucht werden, welche Form des bewegbaren Körpers für bestimmte Produkte und für welche Fördergeschwindigkeiten am besten geeignet ist. Eine kegelstumpfförmige Form lässt zu, dass sich Produkt rasch nach vorne bewegt, eine polygonale Form ist beispielsweise für sehr weiche Produkte förderlich, da durch die Kanten die Produkte leichter abgestreift werden. Für besonders voluminöse Produkte, wie beispielsweise Salatblätter, können spiralförmige, bewegbare Körper am besten geeignet sein, eine Verklumpung oder einen Stau am besten zu vermeiden. Vorzugsweise ist der bewegbare Körper dazu angepasst ist, eine Förderung von Produkt in den abgegrenzten Bereichen zu unterstützen. Hierfür eignet sich zum Beispiel eine spiralförmige Form des bewegbaren Körpers besonders.

So kann über eine Positionierung der rotierenden Körper die Produktverteilung im abgegrenzten Bereich unterstützt werden.

Vorzugsweise sind die abgegrenzten Bereiche Fördereinrichtungen, beispielsweise Dosierrinnen. Bei Dosierrinnen, welche jeweilige Wandungen aufweisen, ist eine erfindungsgemäße Verteileinrichtung besonders vorteilhaft, da der rotierende Körper direkt oberhalb der Grenze der Dosierrinnen platziert werden kann, so dass Produkte, die in einem Grundbereich von zwei benachbarten Dosierrinnen abgeworfen werden, in die eine oder andere Dosierrinne abgeworfen werden.

Vorzugsweise hat jede der Fördereinrichtungen eine linke Kante, eine rechte Kante, sowie einen Auslass an der vorderen Seite. Die linke Kante einer Fördereinrichtung überlappt mit der rechten Kante der links benachbarten Fördereinrichtung und die rechte Kante der Fördereinrichtung überlappt mit einer linken Kante der rechts benachbarten Fördereinrichtung. Auch ein Angrenzen benachbarter Fördereinrichtung ohne Überlappung ist möglich.

Der entsprechend bewegbare Körper ist oberhalb jeder Kante einer Fördereinrichtung, welche mit einer Kante einer benachbarten Fördereinrichtung überlappt, angeordnet. So kann in den Fördereinrichtungen optimale Belegung gewährleistet werden, und Produktstaus bzw. Verklumpungen werden reduziert bzw. minimiert. Es fällt kein Produkt mehr zwischen einzelne Fördereinrichtungen, wo es sich anhäufen bzw. eine Weile verharren könnte, was zu Störungen führen kann.

Vorzugsweise sind die Fördereinrichtung kreisförmig um den Verteiler angeordnet, vorzugsweise ist in diesem Fall der Verteiler ein rotatorischer oder vibratorischer Verteilteller. Solche Konfigurationen haben sich bei Mehrkopfwagen als besonders vorteilhaft erwiesen, da sie platzsparend sind und eine schnelle Förderung von Produkten gewährleisten.

Vorzugsweise ist am Ende bzw. unter dem bewegbaren Körper ein Abstreifer angebracht ist, welcher verhindert, dass Produkt, welches nicht in die Fördereinrichtungen geleitet wurde, zwischen diese gelangt oder vom bewegbaren Körper aufgewickelt wird. Auch dies trägt dazu bei, dass keine Produktanhäufungen oder Produktstaus auftreten.

Vorzugsweise ist der Verteiler auf der Oberseite einer Maschinengrundsäule gelagert, die bewegbaren Körper sind seitlich an der Maschinengrundsäule gelagert.

Dies ermöglicht eine Baugruppe mit Antrieb und Steuerplatine innerhalb der Maschine, und auch die Vermeidung von doppelten Flächen, Spalten, usw.

Vorzugsweise sind für die bewegbaren Körper Führungen vorgesehen, in welchen die bewegbaren Körper aufnehmbar sind, und die Führungen sind von oben betrachtet komplett durch den Verteiler bedeckt. Diese Führungen sind vorzugsweise seitlich in der Maschinengrundseite gelagert. So wird sichergestellt, dass die Führungen die Verteileinrichtung hygienegerecht aufnehmen, d.h. dass hier wenig Spalte und weitere Vertiefungen vorhanden sind, dass aber trotzdem die bewegbaren Körper keine Biegungen durchlaufen oder anderweitig abgelenkt werden können, sondern sich sicher bewegen können, z.B. rotieren.

Solche hygienegerechten Führungen lassen es zu, dass die bewegbaren Körper stabil und biegungsarm nur an einer Seite gelagert werden können.

Vorzugsweise sind die bewegbaren Körper in den Führungen mit Hilfe einer ersten Dichtung, welche vorzugsweise eine Radialwellendichtung ist, nach außen abgedichtet. Dies ist wichtig, um eine hygienegerechte Ausführungsform entsprechend zu gewährleisten, auch kann hier eine Schutzklasse IP69K gewährleistet werden.

Weiterhin ist es auch vorteilhaft, dass die Führungen hin zur Maschinengrundsäule über eine zweite Dichtung, beispielsweise eine Profildichtung, abgedichtet ist. Somit ist eine komplett hygienegerechte Ausführung vorhanden.

Vorzugsweise ist der Abstand zwischen den abgegrenzten Bereichen, den bewegbaren Körpern und dem Verteiler, optional noch zu anderen Bauteilen, veränderbar. Hier kann also eine verschieden hohe Abwurfhöhe auf die bewegbaren Körper eingestellt werden, um sich auf bestimmte Produkte speziell einzustellen. Auch die Distanz zwischen bewegbarem Körper und abgegrenzten Bereichen kann so eingestellt werden, dass Produkt nicht zwischen bewegbarem Körper und abgegrenzten Bereichen eingeklemmt und beschädigt werden kann.

Vorzugweist weist die Verteileinrichtung ferner mindestens einen Sensor auf, welcher Messwerte an eine elektronische Steuereinheit liefert, wobei der Betrieb einzelner bewegbarer Körper und deren Drehrichtung abhängig vom Sensorsignal und/oder der von der elektronischen Steuereinheit vorgegebenen Produktverteilung steuerbar ist.

So kann der Betrieb / die Drehrichtung einzelner bewegbarer Körper abhängig vom Befüllungsgrad der unter dem bewegbaren Körper befindlichen abgegrenzter Bereiche gesteuert werden, und/oder alternativ von der Position des Produkts bzw. Produktüberhangs (beispielsweise hängt eine Nudel zu 70% links über dem bewegbaren Körper über und 30% nach rechts - sie würde dann wegen dem kürzeren Weg nach rechts befördert).

Eine erfindungsgemäße Kombinationswaage weist auf: eine Verteileinrichtung wie oben beschrieben, sowie darunter mehrere Vorratsbehälter und Wägebehälter, welche jeweils unter einem abgegrenzten Bereich angeordnet sind. Ferner beinhaltet die Kombinationswaage eine Sammeleinrichtung, welche unterhalb aller Wägebehälter angeordnet ist.

Eine solche Kombinationswaage ist im Stand der Technik für das Wiegen von Produktportionen bekannt, und eine solche Kombinationswaage kann leicht mit einer Verteileinrichtung mit bewegbaren Körpern nachgerüstet werden. Vorzugsweise sind die Vorratsbehälter und Wägebehälter jeweils einem Auslass der Dosierrinnen zugeordnet.

Vorzugsweise wird eine Verteileinrichtung oder eine Kombinationswaage wie oben beschrieben bestrieben, um Lebensmittel zu wiegen oder zu verteilen.

Im Folgenden werden bevorzugte Ausführungsformen der vorliegenden Erfindung durch die beiliegenden Zeichnungen näher beschrieben.
Fig. 1 zeigt eine Kombinationswaage gemäß dem Stand der Technik von der Seite betrachtet.
Fig. 2 zeigt eine Kombinationswaage gemäß dem Stand der Technik von oben betrachtet.
Fig. 3 zeigt eine erfindungsgemäße Verteileinrichtung, welche einen Verteilteller und mehrere Dosierrinnen, sowie mehrere dazwischengeschaltete bewegbare Körper beinhaltet.
Fig. 4 zeigt eine Ansicht von schräg oben auf eine erfindungsgemäße Verteileinrichtung.
Fig. 5 zeigt eine Ansicht von oben auf eine erfindungsgemäße Verteileinrichtung.
Fig. 6 zeigt eine Detailansicht, durch welche insbesondere der Antrieb der bewegbaren Körper in Schnittansicht dargestellt ist.
Fig. 7 zeigt mehrere Beispiele für die geometrische Form eines bewegbaren Körpers gemäß der vorliegenden Erfindung.
Fig. 8 zeigt einen Ausschnitt einer Verteileinrichtung (ähnlich wie Fig. 4), hier aber noch mit zusätzlichen Abstreifern.

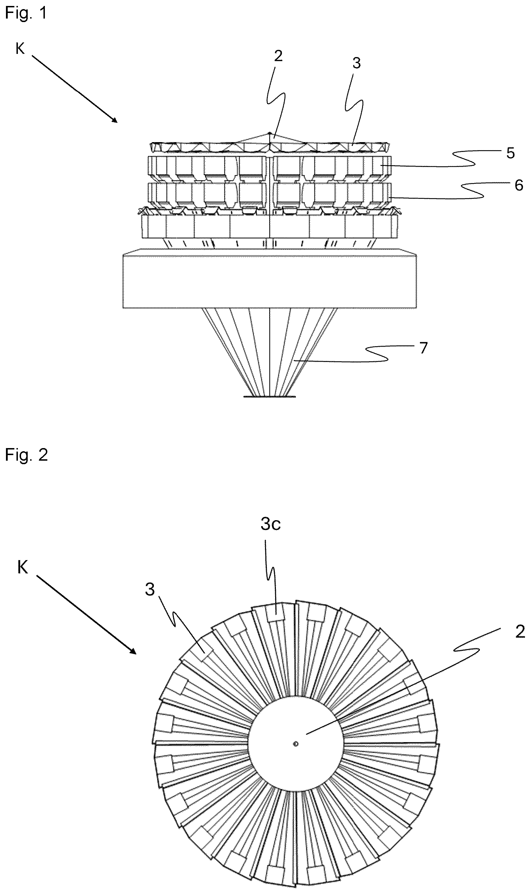

In Fig. 1 ist eine erfindungsgemäße Kombinationswaage K gezeigt. Oben angeordnet ist ein Verteilteller 2, welcher rotiert und Produkt so auf die darunterliegenden, kreisförmig um den Verteilteller 2 angeordneten, Dosierrinnen 3 verteilt. Am Ende der Dosierrinnen 3 fällt Produkt in den darunterliegenden Vorratsbehälter 5, darunter dann in entsprechende Wägebehälter 6, und darunter ist ein Sammeleinrichtung 7 angeordnet, welcher die Produktportionen aufnimmt.

In Fig. 2 ist eine Ansicht von oben auf eine Kombinationswaage K gemäß dem Stand der Technik gezeigt. Hier wird nochmals deutlich, dass ein Verteilteller 2 in der Mitte vorhanden ist, welcher Produkt auf die darum liegenden Dosierrinnen 3 verteilt. Am Ende der Dosierrinnen 3 ist jeweils ein Auslass 3c vorgesehen.

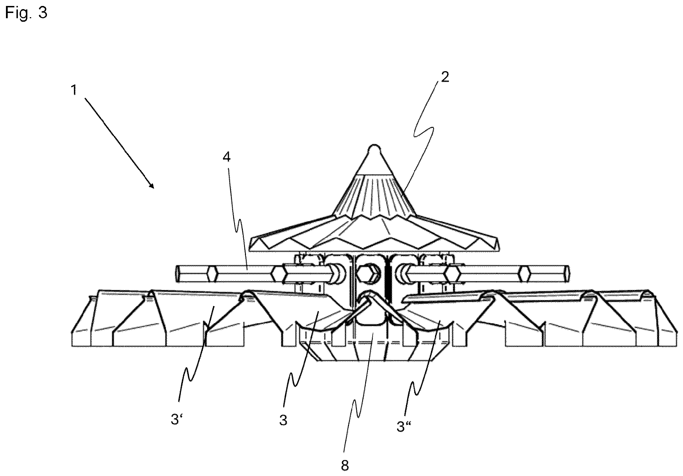

Fig. 3 zeigt eine erfindungsgemäße Verteileinrichtung 1. Auch hier ist oben ein rotierbarer und/oder vibrierbarer Verteilteller 2 angeordnet, welcher ganz oben auf einer Maschinengrundsäule 8 angeordnet ist. Darunter befinden sich, radial rund um die Maschinengrundsäule 8 angeordnet, mehrere bewegbare Körper 4. Unterhalb der bewegbaren Körper 4 sind mehrere Dosierrinnen 3, 3', 3" angeordnet, und jeder bewegbare Körper 4 befindet sich genau oberhalb der Grenze zwischen zwei Dosierrinnen 3, 3', 3". Wenn also Produkt vom Verteilteller 2 auf die Kanten zweier Dosiereinrichtungen 3, 3', 3" fällt, wird verhindert, dass dieses Produkt dort verharrt, da das Produkt dann zuerst auf den entsprechenden bewegbaren Körper 4 fällt, der es entweder nach links in die eine Dosierrinne 3, 3', 3" oder nach rechts in die jeweils andere Dosierrinne 3', 3", 3 leitet.

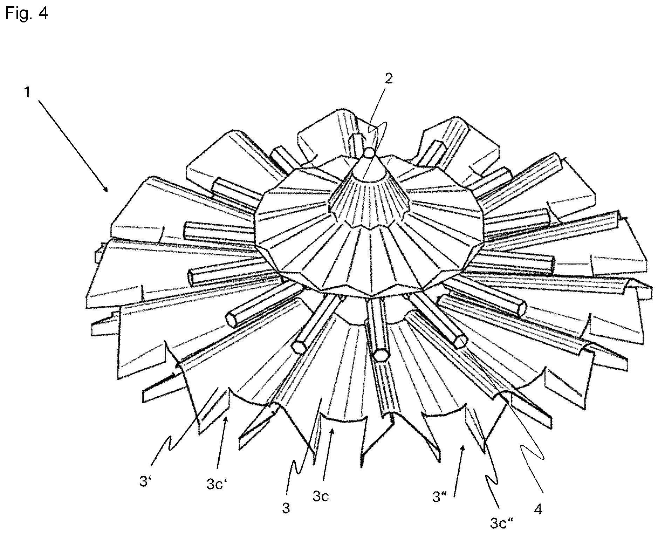

Fig. 4 zeigt eine ähnliche Ansicht wie Fig. 3 nur von schräg oben. Hier wird noch deutlich, dass die Dosierrinnen 3, 3', 3" jeweils einen Auslass 3c, 3c', 3c" aufweisen, durch welchen Produkt in darunter liegende Vorratsbehälter (hier nicht gezeigt) fallen kann. Es wird auch gezeigt, dass die bewegbaren Körper 4 direkt unterhalb von dem Verteilteller 2 angeordnet sind, dass wenn Produkt vom Verteilteller 2 fällt, dieses, sollte es auf eine Kante zwischen zwei Dosierrinnen 3, 3', 3" fallen, von dem entsprechenden bewegbaren Körper 4 entsprechend abgelenkt wird und in eine der Dosierrinnen 3, 3', 3" fällt. Die bewegbaren Körper 4 erstrecken sich ungefähr über die Hälfte der Grenze zwischen zwei Dosierrinnen in radialer Richtung.

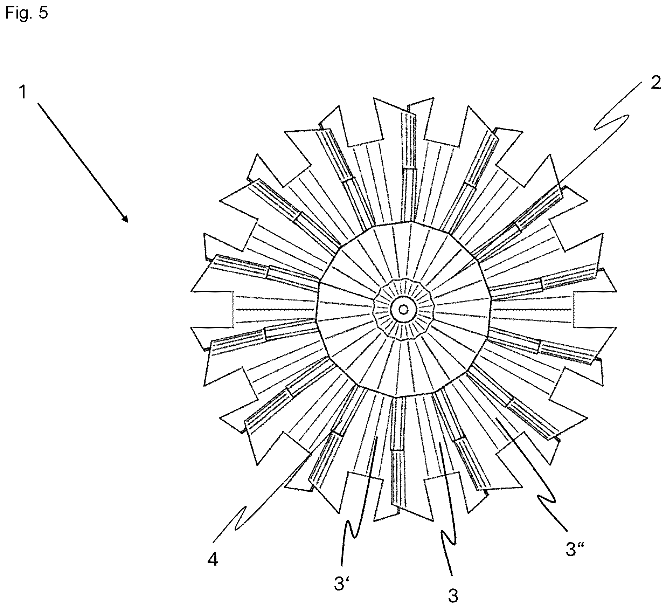

Fig. 5 zeigt eine Ansicht von oben auf die erfindungsgemäße Verteileinrichtung 1. Auch hier wird nochmals deutlich, dass sich die bewegbaren Körper 4 ungefähr über die Hälfte der Längskanten der Dosierrinnen 3, 3', 3" erstrecken.

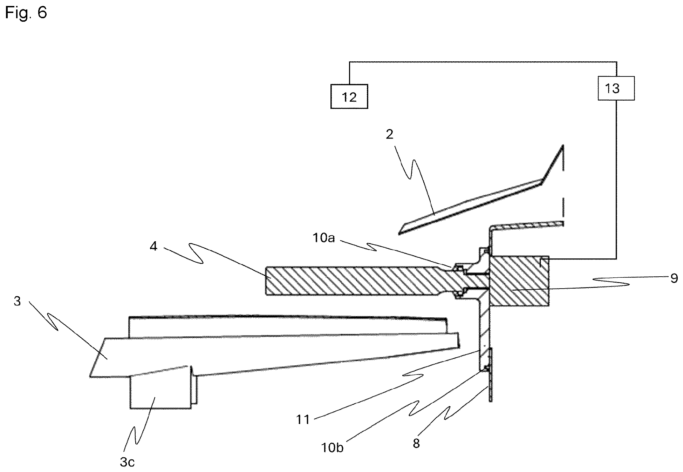

Fig. 6 zeigt eine detaillierte Querschnittsansicht der Baugruppe mit dem bewegbaren Körper 4. Oben ist schematisch der untere Teil eines Verteilers 2 (hier: Verteilteller) dargestellt. Unterhalb des beweglichen Körpers 4 ist eine Fördereinrichtung 3 vorgesehen, welche hier als Dosierrinne ausgeführt und mit einem Auslass 3c vorgesehen ist. Hier ist auch gezeigt, dass in der Maschinengrundsäule 8 eine seitliche Öffnung vorhanden ist, in welche eine Führung 11 eingesteckt ist. In die Führung 11 ist mit einer ersten Dichtung (Radialwellendichtung) 10a abgedichtet ein bewegbarer Körper 4 eingesteckt. Die Führung 11 ist mittels einer zweiten Dichtung 10b (zum Beispiel Profildichtung) hin zur Maschinengrundsäule 8 abgedichtet. Somit ist eine durchgehend hygienegerechte Gestaltung vorhanden. Im Inneren der Maschinengrundsäule 8 ist ein Antrieb 9 zu sehen, hier als einfacher Motor ausgeführt. In der Verteileinrichtung 1 hat jeder bewegbare Körper 4 einen eigenen Antrieb 9. So kann jeder bewegbare Körper 4 individuell angesteuert werden. Oberhalb des bewegbaren Körpers 4 ist schematisch ein Sensor 12 eingezeichnet, welcher mit einer elektronischen Steuereinheit 13 verbunden ist. Die Steuereinrichtung 13 ist schematisch auch mit dem Antrieb 9 verbunden. So können oberhalb des bewegbaren Körpers Anhäufungen oder andere Blockadesituationen erkannt werden, und der bewegbare Körper 4 kann individuell angesteuert werden.

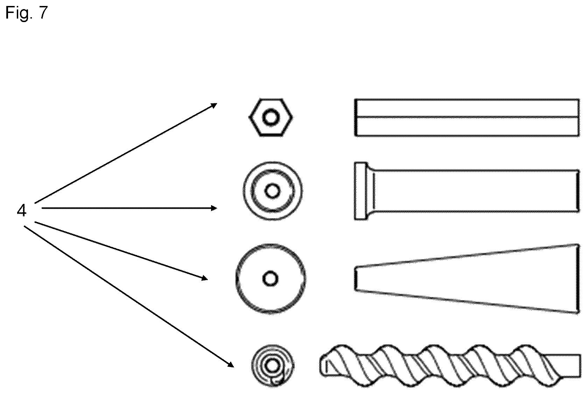

Fig. 7 zeigt Beispiele für die Form des bewegbaren Körpers 4. Links ist jeweils eine Querschnittsansicht vorhanden, rechts eine Ansicht von der Seite. Oben ist ein hexagonaler Querschnitt gezeigt, in der Mitte eine zylindrische Form sowie eine kegelstumpfförmige Form, und unten eine spiralförmige Ausführungsform. Wie bereits oben beschrieben, können für verschiedene Produkte verschiedene Formen von bewegbaren Körpern verwendet werden.

Auch verschiedene Rauheiten, Oberflächenstrukturierungen usw. können vorhanden sein - beispielsweise eine Anti-Haft-Beschichtung.

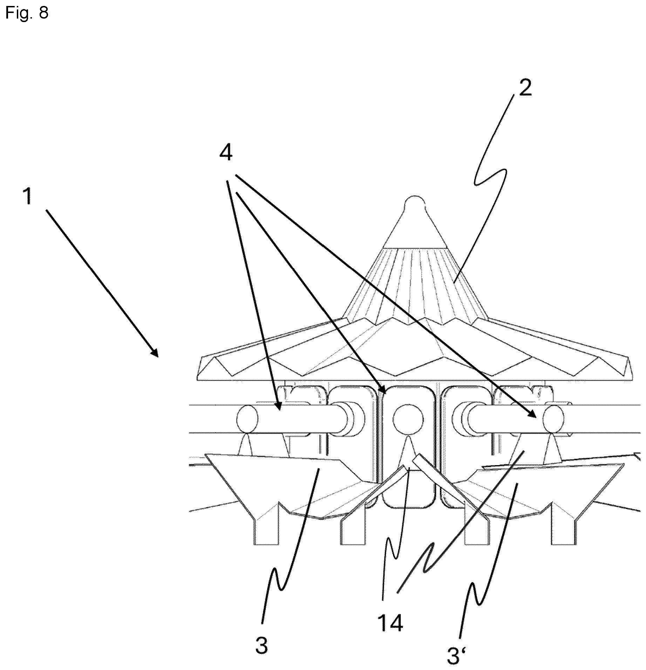

Fig. 8 zeigt einen Ausschnitt einer Verteileinrichtung 1 (ähnlich wie Fig. 4), hier aber noch mit zusätzlichen Abstreifern 14. Unter jedem bewegbaren Körper 4 ist ein keilförmiger Abstreifer 14 vorgesehen. Die keilförmige Form der Abstreifer 14 (mit einer Spitze) verhindert, dass sich Produkte auf einem bewegbaren Körper 4 aufwickeln und dann wiederum mittig zwischen zwei abgegrenzten Bereichen 3, 3' herunterfallen. Zudem soll er verhindern, dass sich Produkte auf den bewegbaren Körpern 4 aufrollen bzw. aufwickeln. Die Spitzen der Abstreifer 14 sind dicht unterhalb der bewegbaren Körpern 4 angeordnet und können die bewegbaren Körper 4 sogar berühren.

Die vorliegende Erfindung ist nicht auf die oben genannten Ausführungsformen beschränkt. Die Verteileinrichtung 1 kann nicht nur in einer Kombinationswaage K verwendet werden, sie kann in sämtlichen weiteren Maschinen und Anlagen verwendet werden, beispielsweise in Verpackungsmaschinen. Es ist ferner wichtig, dass sämtliche Oberflächen von außen gut reinigbar sind, d.h. Spalten, Vertiefungen und raue Oberflächen sind hier zu vermeiden.

### BEZUGSZEICHENLISTE

- K: Kombinationswaage
- P: Produkt
- M: Produktmenge

- 1: Verteileinrichtung
- 2: Verteiler / Verteilteller
- 3: abgegrenzter Bereich / Fördereinrichtung / Dosierrinne
- 3a: linke Kante
- 3b: rechte Kante
- 3c: Auslass
- 4: bewegbarer Körper
- 5: Vorratsbehälter
- 6: Wägebehälter
- 7: Sammeleinrichtung
- 8: Maschinengrundsäule
- 9: Antrieb für bewegbaren Körper
- 10a: erste Dichtung (Radialwellendichtung)
- 10b: zweite Dichtung (für Führung)
- 11: Führung für bewegbaren Körper
- 12: Sensor
- 13: elektronische Steuereinheit
- 14: Abstreifer

## Patentansprüche

1. Verteileinrichtung (1) zur Verteilung von Produktmengen (P), aufweisend:
mindestens einen Verteiler (2), welcher dazu angepasst ist, Produkt (P) in mehrere Produktmengen (M) aufzuteilen,
mehrere abgegrenzte Bereiche (3, 3', 3"), welche unterhalb des mindestens einen Verteilers (2) angeordnet sind,
wobei oberhalb der abgegrenzten Bereiche (3, 3', 3") jeweils mindestens ein bewegbarer Körper (4) angeordnet ist,
dessen eines Ende gelagert ist, und dessen anderes Ende ungelagert ist.

2. Verteileinrichtung (1) gemäß Anspruch 1, wobei jeder der bewegbaren Körper (4) mit mindestens einem Freiheitsgrad bewegbar ausgeführt ist.

3. Verteileinrichtung (1) gemäß Anspruch 1 oder 2, wobei jeder der bewegbaren Körper (4) mit einem eigenen Antrieb (9) verbunden ist, und unabhängig voneinander ansteuerbar ist.

4. Verteileinrichtung (1) gemäß einem der vorhergehenden Ansprüche, wobei jeder der bewegbaren Körper (4) dazu angepasst ist, eine rotierende Bewegung auszuführen, vorzugsweise um dessen eigene Längsachse.

5. Verteileinrichtung (1) gemäß Anspruch 4, wobei jeder der bewegbaren Körper (4) in jede der beiden Drehrichtungen, drehbar ist.

6. Verteileinrichtung (1) gemäß einem der vorhergehenden Ansprüche, wobei der bewegbare Körper (4) vorzugsweise zylindrisch, kegelstumpfförmig, polygonal, sternförmig oder spiralförmig ist, und vorzugsweise dazu angepasst ist, eine Förderung von Produkt in den abgegrenzten Bereichen (3, 3', 3") zu unterstützen.

7. Verteileinrichtung (1) gemäß einem der vorhergehenden Ansprüche, wobei die abgegrenzten Bereiche (3, 3', 3") Fördereinrichtungen sind.

8. Verteileinrichtung (1) gemäß Anspruch 7, wobei jede der Fördereinrichtungen (3) eine linke Kante (3a), eine rechte Kante (3b) sowie einen Auslass (3c) aufweist, und wobei entsprechende bewegbare Körper (4, 4') oberhalb jeder Kante (3a, 3b) einer Fördereinrichtung (3), welche an einer Kante (3a', 3a", 3b', 3b") einer benachbarten Fördereinrichtung (3', 3") angrenzt oder überlappt, angeordnet ist.

9. Verteileinrichtung (1) gemäß einem der vorhergehenden Ansprüche, wobei am Ende bzw. unter dem bewegbaren Körper (4) ein Abstreifer (14) angebracht ist, welcher verhindert, dass Produkt, welches nicht in die Fördereinrichtungen (3) geleitet wurde, zwischen diese gelangt oder vom bewegbaren Körper (4) aufgewickelt wird.

10. Verteileinrichtung (1) gemäß einem der vorhergehenden Ansprüche, wobei der mindestens eine Verteiler (2) an der Oberseite einer Maschinengrundsäule (8) sowie die bewegbaren Körper (4) seitlich an der Maschinengrundsäule (8) gelagert sind.

11. Verteileinrichtung (1) gemäß einem der vorhergehenden Ansprüche, wobei für die bewegbaren Körper (4) Führungen (11) vorgesehen sind, in welchen die bewegbaren Körper (4) aufnehmbar sind, wobei vorzugsweise die Führungen (11), von oben betrachtet, komplett durch den Verteiler (2) verdeckt sind, wobei die bewegbaren Körper (4) in den Führungen mithilfe einer ersten Dichtung (10a), vorzugsweise Radialwellendichtung, nach außen hygienisch abgedichtet sind.

12. Verteileinrichtung (1) gemäß einem der vorhergehenden Ansprüche, wobei der Abstand zwischen den bewegbaren Körpern (4) und den mehreren abgegrenzten Bereichen (3) bzw. dem mindestens einen Verteiler (2) veränderbar ist.

13. Verteileinrichtung (1) gemäß einem der vorhergehenden Ansprüche, ferner mindestens einen Sensor (14) beinhaltend, welcher Messwerte an eine elektronische Steuereinheit (15) liefert, wobei der Betrieb einzelner bewegbarer Körper (4) und deren Drehrichtung abhängig vom Sensorsignal und/oder der von der elektronischen Steuereinheit (15) vorgegebenen Produktverteilung steuerbar ist.

14. Kombinationswaage (K), aufweisend:
eine Verteileinrichtung (1) gemäß einem der vorhergehenden Ansprüche, mehrere Vorratsbehälter (5) und/oder Wägebehälter (6) welche jeweils unter einem der abgegrenzten Bereiche (3) angeordnet sind,
sowie eine Sammeleinrichtung (7), welche unterhalb der Vorratsbehälter (5) und/oder Wägebehälter (6) angeordnet ist.

15. Verwendung einer Verteileinrichtung (1) gemäß einem der Ansprüche 1 bis 13 oder einer Kombinationswaage (K) gemäß Anspruche 14 zum Verteilen und/oder Wiegen von Lebensmitteln.

## Geänderte Patentansprüche

### Geänderte Patentansprüche gemäss Regel 137(2) EPÜ.

1. Verteileinrichtung (1) zur Verteilung von Produktmengen (P), aufweisend:
mindestens einen Verteiler (2), welcher dazu angepasst ist, Produkt (P) in mehrere Produktmengen (M) aufzuteilen,
mehrere abgegrenzte Bereiche (3, 3', 3"), welche unterhalb des mindestens einen Verteilers (2) angeordnet sind,
wobei oberhalb der abgegrenzten Bereiche (3, 3', 3") jeweils mindestens ein bewegbarer Körper (4) angeordnet ist,
dessen eines Ende gelagert ist, und dessen anderes Ende ungelagert ist, wobei die Verteileinrichtung (1) ferner mindestens einen Sensor (14) beinhaltet, welcher Messwerte an eine elektronische Steuereinheit (15) liefert,
wobei der Betrieb einzelner bewegbarer Körper (4) und deren Drehrichtung abhängig vom Sensorsignal und/oder der von der elektronischen Steuereinheit (15) vorgegebenen Produktverteilung steuerbar ist.

2. Verteileinrichtung (1) gemäß Anspruch 1, wobei jeder der bewegbaren Körper (4) mit mindestens einem Freiheitsgrad bewegbar ausgeführt ist.

3. Verteileinrichtung (1) gemäß Anspruch 1 oder 2, wobei jeder der bewegbaren Körper (4) mit einem eigenen Antrieb (9) verbunden ist, und unabhängig voneinander ansteuerbar ist.

4. Verteileinrichtung (1) gemäß einem der vorhergehenden Ansprüche, wobei jeder der bewegbaren Körper (4) dazu angepasst ist, eine rotierende Bewegung auszuführen, vorzugsweise um dessen eigene Längsachse.

5. Verteileinrichtung (1) gemäß Anspruch 4, wobei jeder der bewegbaren Körper (4) in jede der beiden Drehrichtungen, drehbar ist.

6. Verteileinrichtung (1) gemäß einem der vorhergehenden Ansprüche, wobei der bewegbare Körper (4) vorzugsweise zylindrisch, kegelstumpfförmig, polygonal, sternförmig oder spiralförmig ist, und vorzugsweise dazu angepasst ist, eine Förderung von Produkt in den abgegrenzten Bereichen (3, 3', 3") zu unterstützen.

7. Verteileinrichtung (1) gemäß einem der vorhergehenden Ansprüche, wobei die abgegrenzten Bereiche (3, 3', 3") Fördereinrichtungen sind.

8. Verteileinrichtung (1) gemäß Anspruch 7, wobei jede der Fördereinrichtungen (3) eine linke Kante (3a), eine rechte Kante (3b) sowie einen Auslass (3c) aufweist, und wobei entsprechende bewegbare Körper (4, 4') oberhalb jeder Kante (3a, 3b) einer Fördereinrichtung (3), welche an einer Kante (3a', 3a", 3b', 3b") einer benachbarten Fördereinrichtung (3', 3") angrenzt oder überlappt, angeordnet ist.

9. Verteileinrichtung (1) gemäß einem der vorhergehenden Ansprüche, wobei am Ende bzw. unter dem bewegbaren Körper (4) ein Abstreifer (14) angebracht ist, welcher verhindert, dass Produkt, welches nicht in die Fördereinrichtungen (3) geleitet wurde, zwischen diese gelangt oder vom bewegbaren Körper (4) aufgewickelt wird.

10. Verteileinrichtung (1) gemäß einem der vorhergehenden Ansprüche, wobei der mindestens eine Verteiler (2) an der Oberseite einer Maschinengrundsäule (8) sowie die bewegbaren Körper (4) seitlich an der Maschinengrundsäule (8) gelagert sind.

11. Verteileinrichtung (1) gemäß einem der vorhergehenden Ansprüche, wobei für die bewegbaren Körper (4) Führungen (11) vorgesehen sind, in welchen die bewegbaren Körper (4) aufnehmbar sind, wobei vorzugsweise die Führungen (11), von oben betrachtet, komplett durch den Verteiler (2) verdeckt sind, wobei die bewegbaren Körper (4) in den Führungen mithilfe einer ersten Dichtung (10a), vorzugsweise Radialwellendichtung, nach außen hygienisch abgedichtet sind.

12. Verteileinrichtung (1) gemäß einem der vorhergehenden Ansprüche, wobei der Abstand zwischen den bewegbaren Körpern (4) und den mehreren abgegrenzten Bereichen (3) bzw. dem mindestens einen Verteiler (2) veränderbar ist.

13. Kombinationswaage (K), aufweisend:
eine Verteileinrichtung (1) gemäß einem der vorhergehenden Ansprüche,
mehrere Vorratsbehälter (5) und/oder Wägebehälter (6) welche jeweils unter einem der abgegrenzten Bereiche (3) angeordnet sind,
sowie eine Sammeleinrichtung (7), welche unterhalb der Vorratsbehälter (5) und/oder Wägebehälter (6) angeordnet ist.

14. Verwendung einer Verteileinrichtung (1) gemäß einem der Ansprüche 1 bis 12 oder einer Kombinationswaage (K) gemäß Anspruche 14 zum Verteilen und/oder Wiegen von Lebensmitteln.
